# EUROPÄISCHE PATENTANMELDUNG

(11) **EP 0 924 120 A2**
(43) Veröffentlichungstag der Anmeldung: **23.06.1999**
(21) Anmeldenummer: 98123193.9
(22) Anmeldetag: 04.12.1998
(51) Int. Cl.: B60L 9/22, H02M 7/521, H02P 7/63, G05F 1/652

(54) **Einspeiseschaltung für ein Mehrsystem-Triebfahrzeug**

(30) Priorität: 17.12.1997 DE 19756245
(71) Anmelder: SIEMENS AKTIENGESELLSCHAFT, 80333 München (DE)
(72) Erfinder: Budig, Olaf Dipl.-Ing., 91056 Erlangen (DE)

(57) **Zusammenfassung**

Bei einem ersten Umrichter (1) und einem zweiten Umrichter (2), die jeweils einen Eingangsstromrichter (3, 4) sowie einen Teil-Zwischenkreis (5, 6) mit einem Zwischenkreis-Kondensator (7, 8) und einen motorseitigen Stromrichter umfassen, sind im AC-Betrieb die Teil-Zwischenkreise (5, 6) parallelgeschaltet und die Eingangsstromrichter (3, 4) jeweils an eine Sekundär-Teilwicklung (11, 12) eines Traktionstransformators geschaltet, der primärseitig an ein Wechselspannungsnetz geschaltet ist, und beiden Zwischenkreis-Kondensatoren (7, 8) ist ein Saugkreis (21) parallelgeschaltet, der aus einem Saugkreis-Kondensator (22) und einer dazu in Reihe geschalteten Saugkreisdrossel (23) besteht, und im DC-Betrieb sind die Teil-Zwischenkreise (5, 6) über Stellerdrosseln (25, 26, 28, 29) in Reihe geschaltet, die Eingangs stromrichter (3, 4) wirken als Gleichstromsteller und die Saugkreisdrossel (23) ist durch Reihenschaltung mit einer Netzdrossel (30) zu einem Eingangs filter geschaltet, dessen Eingangsfilterkapazität vom Saugkreiskondensator (22) gebildet wird.

## Beschreibung

Die Erfindung betrifft eine Einspeiseschaltung für ein Mehrsystem-Triebfahrzeug.

Derartige Einspeiseschaltungen, die den universellen Betrieb von elektrischen Triebfahrzeugen an Wechsel- und Gleichspannungssystemen ermöglichen, sind z.B. aus der EP 0 384 222 B1 und aus der DE 44 03 762 C1 bekannt.

Die in der DE 44 03 762 C1 beschriebene Einspeiseschaltung weist die Merkmale a) bis c1) sowie die Merkmale d1) und d2) auf. Weiterhin sind bei dieser Einspeiseschaltung im DC-Betrieb Saugkreis-Kondensatoren dem ersten und dem zweiten Zwischenkreis-Kondensator parallel geschaltet.

In den bekannten Fällen wird im DC-Betrieb das Eingangsfilter (auch als Netz filter bezeichnet) von einer Netzdrossel und einem Saugkreiskondensator gebildet. Um auch größere Netzrückwirkungen zuverlässig zu unterbinden, müssen diese Netzdrosseln entsprechend groß dimensioniert werden, wodurch sich für die Traktionsausrüstung ein hohes Gewicht ergibt.

Aufgabe der vorliegenden Erfindung ist es deshalb, eine Einspeiseschaltung für ein Mehrsystem-Triebfahrzeug zu schaffen, durch die das Gewicht der elektrischen Traktionsausrüstung verringert werden kann.

Die Aufgabe wird erfindungsgemäß durch die Merkmale des Anspruchs 1 gelöst. Vorteilhafte Ausgestaltungen der Erfindung sind in den weiteren Ansprüchen beschrieben.

Die erfindungsgemäße Einspeiseschaltung weist einen ersten Umrichter und einen zweiten Umrichter auf. Der erste Umrichter umfaßt einen ersten Eingangsstromrichter sowie einen ersten Teil-Zwischenkreis und einen ersten motorseitigen Stromrichter. Der zweite Umrichter umfaßt einen zweiten Eingangsstromrichter sowie einen zweiten Teil-Zwischenkreis und einen zweiten motorseitigen Stromrichter. Sowohl der Teil-Zwischenkreis des ersten Umrichters als auch der Teil-Zwischenkreis des zweiten Umrichters weisen jeweils einen Zwischenkreis-Kondensator auf.

Bei der Einspeiseschaltung gemäß Anspruch 1 sind im AC-Betrieb der erste Teil-Zwischenkreis und der zweite Teil-Zwischenkreis parallelgeschaltet. Weiterhin sind die Eingangsstromrichter jeweils an eine Sekundär-Teilwicklung eines Traktionstransformators geschaltet, der primärseitig an ein Wechselspannungsnetz geschaltet ist. Dem ersten Zwischenkreis-Kondensator und dem zweiten Zwischenkreis-Kondensator ist ein Saugkreis parallelgeschaltet, der aus einem Saugkreis-Kondensator und einer dazu in Reihe geschalteten Saugkreisdrossel besteht.

Im DC-Betrieb ist bei der Einspeiseschaltung gemäß Anspruch 1 der erste Teil-Zwischenkreis und der zweite Teil-Zwischenkreis über Stellerdrosseln in Reihe geschaltet und die Eingangsstromrichter wirken als Gleichstromsteller. Weiterhin ist die Saugkreisdrossel durch Reihenschaltung mit einer Netzdrossel zu einem Eingangs filter geschaltet, dessen Eingangsfilterkapazität vom Saugkreis-Kondensator gebildet wird.

Bei der Einspeiseschaltung gemäß Anspruch 1 kann durch die Reihenschaltung von Netzdrossel und Saugkreisdrossel zu einer gemeinsamen Filterinduktivität das Gewicht das Traktionsausrüstung merklich verringert werden.

Bei einer Ausführungsform gemäß Anspruch 2 kann auf einfache Weise eine Einspeiseschaltung ohne Bremssteller verwirklicht werden, indem man den nur im DC-Betrieb erforderlichen Bremssteller aus den Brückenzweigen des dritten Eingangsstromrichters bildet, die im AC-Betrieb als Eingangssteller verwendet werden.

Durch die Anordnung eines Kurzschließers parallel zum Saugkreis-Kondensator, wird nur noch ein Kurzschließer benötigt.

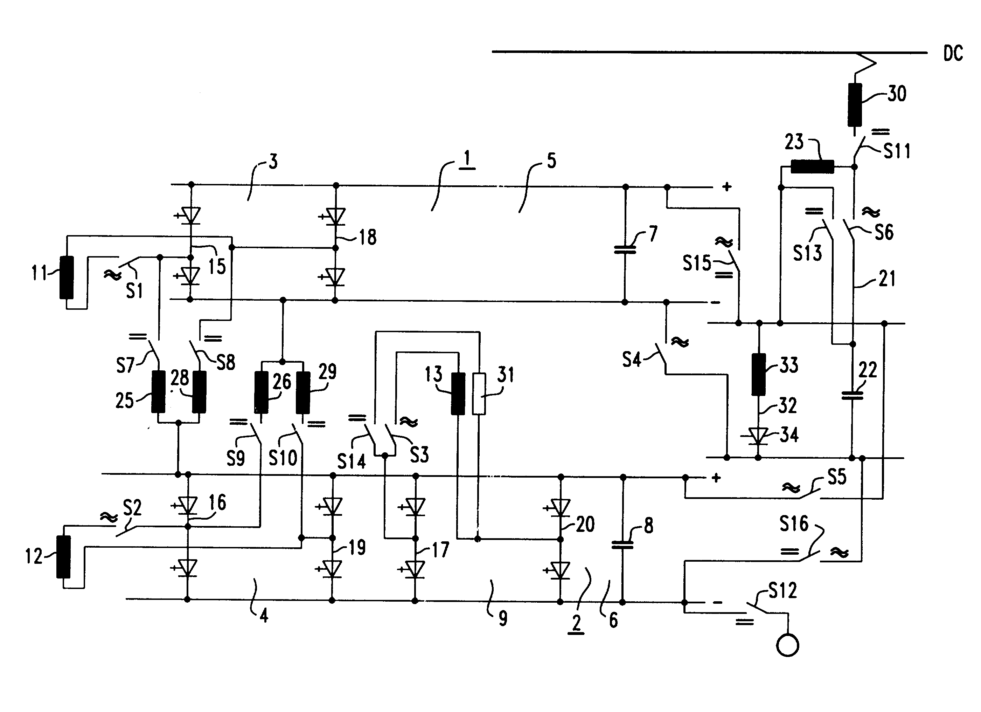

Zur weiteren Erläuterung der Erfindung wird auf die Zeichnung Bezug genommen, in der eine vorteilhafte Ausführungsform einer erfindungsgemäßen Einspeiseschaltung schematisch veranschaulicht ist.

Die in der Zeichnung dargestellte Einspeiseschaltung weist einen ersten Umrichter 1 und einen zweiten Umrichter 2 auf.

Der erste Umrichter 1 umfaßt einen ersten Eingangsstromrichter 3, einen ersten Teil-Zwischenkreis 5 und einen, in der Zeichnung nicht dargestellten ersten motorseitigen Stromrichter. Im ersten Teil-Zwischenkreis 5 ist ein erster Zwischenkreis-Kondensator 7 angeordnet.

Der zweite Umrichter 2 umfaßt einen zweiten Eingangsstromrichter 4, einen zweiten Teil-Zwischenkreis 6 und einen in der Zeichnung ebenfalls nicht dargestellten zweiten motorseitigen Stromrichter. Der zweite Teil-Zwischenkreis 6 weist einen zweiten Zwischenkreis-Kondensator 8 auf.

Im zweiten Umrichter 2 ist parallel zum zweiten Eingangsstromrichter 4 ein dritter Eingangsstromrichter 9 angeordnet.

Die Eingangsstromrichter 3, 4 und 9 weisen im dargestellten Ausführungsbeispiel jeweils einen ersten Brückenzweig 15 bis 17 und einen zweiten Brückenzweig 18 bis 20 auf, wobei jeder Brückenzweig 15 bis 20 aus zwei in Reihe geschalteten GTO-Thyristoren besteht. Zu den GTO-Thyristoren antiparallel geschaltete Dioden sind in der Zeichnung nicht dargestellt.

Im AC-Betrieb sind die Eingangsstromrichter 3, 4 und 9 über Schalter S1 bis S3 jeweils an eine Sekundär-Teilwicklung 11 bis 13 eines Traktionstransformators geschaltet. Weiterhin sind der erste Teil-Zwischenkreis 5 und der zweite Teil-Zwischenkreis 6 durch Schließen eines Schalters S4 und eines Schalters S5 parallelgeschaltet. Die ersten Brückenzweige 15 bis 17 und die zweiten Brückenzweige 18 bis 20 der betreffenden Eingangsstromrichter 3, 4 und 9 sind damit jeweils als Vierquadrantensteller geschaltet.

Der Traktionstransformator ist mit seiner in der Zeichnung nicht dargestellten Primärwicklung an ein Wechselspannungsnetz geschaltet, bei dem es sich beispielsweise um ein 15 kV 16 2/3 Hz- bzw. um ein 25 kV 50 Hz-Netz handeln kann.

Dem ersten Zwischenkreis-Kondensator 7 und dem zweiten Zwischenkreis-Kondensator 8 ist ein Saugkreis 21 parallelgeschaltet, der aus einem Saugkreis-Kondensator 22 und einer dazu in Reihe geschalteten Saugkreisdrossel 23 hesteht. Die Reihenschaltung des Saugkreis-Kondensators 22 und der Saugkreisdrossel 23 erfolgt durch Schließen eines Schalters S6.

Im DC-Betrieb werden der erste Teil-Zwischenkreis 5 und der zweite Teil-Zwischenkreis über Stellerdrosseln 25 und 26 sowie 28 und 29 in Reihe geschaltet. Im dargestellten Ausführungsbeispiel ist hierfür zu jedem Brückenzweig 15 bis 18 jeweils eine Stellerdrossel 25 und 26 sowie 28 und 29 in Reihe angeordnet und an die Zwischenkreis-Schiene des jeweils anderen Umrichters geführt. Für die Reihenschaltung der beiden Teil-Zwischenkreise 5 und 6 sind Schalter S7 bis S10 zu schließen. Von den Schaltern S7 bis S10 liegt jeweils einer in Reihe zu den Stellerdrosseln 25 und 26 sowie 28 und 29. Es versteht sich in diesem Zusammenhang von selbst, daß vorher die Schalter S1 bis S6 geöffnet werden müssen.

Weiterhin ist durch Schließen eines Schalters S11 die positive Zwischenkreis-Schiene des ersten Teil-Zwischenkreises 5 über eine Netzdrossel 30 und einen Stromabnehmer mit dem Gleichspannungsnetz verbindbar, wobei als Gleichspannungsnetz z. B. ein 1,5 kV- oder ein 3,0 kV-Netz vorgesehen sein kann. Die negative Zwischenkreis-Schiene des zweiten Teil-Zwischenkreises 6 ist durch Schließen eines Schalters S12 mit dem Erdpotential verbindbar. Durch die schaltbare Erdanbindung kann die gezeigte Einspeiseschaltung im AC-Betrieb erdfrei betrieben werden. Der erste Eingangsstromrichter 3 und der zweite Eingangsstromrichter 4 wirken im DC-Betrieb damit als Gleichstromsteller. Abhängig von der Eingangsgleichspannung arbeiten die Eingangsstromrichter 3 und 4 als Hochsetzsteller oder als Tiefsetzsteller.

Der im DC-Betrieb notwendige Eingangs filter wird erfindungsgemäß dadurch gebildet, daß die Saugkreisdrossel 23 in Reihe zur Netzdrossel 30 geschaltet wird. Dies erfolgt beim Schließen des Schalters S11. Die aus der Saugkreisdrossel 23 und der Netzdrossel 30 gebildete Eingangsfilterinduktivität ist durch Schließen eines Schalters S13 mit dem Saugkreiskondensator 22 in Reihe schaltbar. Der Saugkreiskondensator 22 bildet bei Gleichstromeinspeisung also die Eingangsfilterkapazität. Bei der erfindungsgemäßen Einspeiseschaltung wird damit im DC-Betrieb durch Reihenschaltung der Netzdrossel 30 und der Saugkreisdrossel 23 eine Eingangsfilterinduktivität gebildet, die in Reihe zum Saugkreiskondensator 22 geschaltet ist. Dadurch wird eine merkliche Gewichtseinsparung bei der Traktionsausrüstung erzielt.

Bei der in der Zeichnung dargestellten Ausführungsform ist der dritte Eingangsstromrichter 9, der im AC-Betrieb an die dritte Sekundär-Teilwicklung 13 geschaltet ist, im DC-Betrieb an einen Bremswiderstand 31 schaltbar. Die Schaltung der beiden Brückenzweige 17 und 20 des dritten Eingangsstromrichters 9 an den Bremswiderstand 31 erfolgt durch Schließen eines Schalters S14.

Um im AC-Betrieb bei einem auftretenden Fehler in einem der beiden Umrichter 1 und 2 eine sichere Trennung beider Umrichter 1 und 2 voneinander zu gewährleisten, ist parallel zum Saugkreiskondensator 22 für beide Teil-Zwischenkreise 5 und 6 ein gemeinsamer Kurzschließer 32 angeordnet. Der Kurzschließer 32 umfaßt eine Kurzschließerdrossel 33, zu der ein Thyristor 34 in Reihe geschaltet ist. Bei einem auftretenden Fehler öffnen, abhängig vom Fehlerort, die in Reihe zum Kurzschließer 32 liegenden Schalter S15, S16, S4 und S5.

Im DC-Betrieb sind lediglich die Schalter S15 und S16 geschlossen, um den Kurzschließer 32 betreiben zu können.

Bei der gezeigten Einspeiseschaltung besteht darüber hinaus die Möglichkeit, im Fehlerfall mindestens 33 % der Antriebsleistung weiter nutzen zu können.

## Patentansprüche

1. Einspeiseschaltung, die folgende Merkmale aufweist:
a) Einen ersten Umrichter (1), der einen ersten Eingangsstromrichter (3) sowie einen ersten Teil-Zwischenkreis (5) mit einem ersten Zwischenkreis-Kondensator (7) und einen ersten motorseitigen Stromrichter umfaßt,
b) einen zweiten Umrichter (2), der einen zweiten Eingangsstromrichter (4) sowie einen zweiten Teil-Zwischenkreis (6) mit einem zweiten Zwischenkreis-Kondensator (8) und einen zweiten motorseitigen Stromrichter umfaßt, wobei
c) im AC-Betrieb
c1) der erste Teil-Zwischenkreis (5) und der zweite Teil-Zwischenkreis (6) parallelgeschaltet und die Eingangsstromrichter (3, 4) jeweils an eine Sekundär-Teilwicklung (11, 12) eines Traktionstransformators geschaltet sind, der primärseitig an ein Wechselspannungsnetz geschaltet ist, und
c2) dem ersten Zwischenkreis-Kondensator (7) und dem zweiten Zwischenkreis-Kondensator (8) ein Saugkreis (21) parallelgeschaltet ist, der aus einem Saugkreis-Kondensator (22) und einer dazu in Reihe geschalteten Saugkreisdrossel (23) besteht, und wobei
d) im DC-Betrieb
d1) der erste Teil-Zwischenkreis (5) und der zweite Teil-Zwischenkreis (6) über Stellerdrosseln (25, 26, 28, 29) in Reihe geschaltet sind,
d2) die Eingangsstromrichter (3, 4) als Gleichstromsteller wirken und
d3) die Saugkreisdrossel (23) durch Reihenschaltung mit einer Netzdrossel (30) zu einem Eingangsfilter geschaltet ist, dessen Eingangsfilterkapazität vom Saugkreiskondensator (22) gebildet wird.

2. Einspeiseschaltung nach Anspruch 1 mit folgendem Merkmal:
e) Im zweiten Umrichter (2) ist parallel zum zweiten Eingangsstromrichter (4) ein dritter Eingangsstromrichter (9) angeordnet, dessen Brückenzweige (17, 20)
e1) im AC-Betrieb an eine Drossel, vorzugsweise an eine Sekundär-Teilwicklung (13) des Traktionsstransformators und
e2) im DC-Betrieb an einen Bremswiderstand (31) schaltbar sind.

3. Einspeiseschaltung nach Anspruch 1 mit folgendem Merkmal:
f) Parallel zum Saugkreis (21) ist ein Kurzschließer (32) angeordnet.
